# EUROPEAN PATENT APPLICATION

(11) **EP 4 353 966 A1**
(43) Date of publication of application: **17.04.2024**
(21) Application number: 22200763.5
(22) Date of filing: 11.10.2022
(51) Int. Cl.: F03D 7/02, E04H 9/02, F03D 80/80, F16F 15/023, F03D 13/35

(54) **AUTOMATIC MONITORING OF A FLUID FILLED DAMPER OF A WIND TURBINE**

(71) Applicant: Siemens Gamesa Renewable Energy A/S, 7330 Brande (DK)
(72) Inventor: Schmidt, Soeren Adrian, 7100 Vejle (DK)
(74) Representative: SGRE-Association

(57) **Abstract**

A method for monitoring a fluid filled damper (1) of a wind turbine (10) is described. The method for monitoring a fluid filled damper (1) of a wind turbine (10) comprises the steps of measuring a pressure value (PV) inside a fluid filled damper (1) of the wind turbine (10), comparing the pressure value (PV) with a predetermined threshold value (TH) and initiating an idle state of the rotor (5) of the wind turbine (10) if it is detected that the threshold value (TH) has been exceeded. Further, a leak monitoring device (6) is described. Additionally, a wind turbine (10) is described.

## Description

The invention concerns a method for monitoring a fluid filled damper of a wind turbine. The invention is also related to a leak monitoring device. Further, the invention concerns a wind turbine.

Wind turbines comprise fluid filled containers which are installed in a tower of a wind turbine and are used as dampers for changing the dynamics of the tower of the wind turbine. The obtained dynamics are essential for keeping the turbine within safe operational limits. The dynamics depend on the fluid type, weight and more. Therefore, it is essential that the fluid does not leak out, with the result of change in damper dynamics.

For maintenance of the dampers, during annual service, technicians are visually inspecting the fluid containers for leaks. However, regular maintenance by technicians is expensive and there is a risk of running the turbine with faulty fluid containers between inspections.

Hence, there is a problem of a more reliable monitoring and operation of a wind turbine comprising dampers including fluid filled containers.

This problem is solved by a method for monitoring a fluid filled damper of a wind turbine according to claim 1, by a leak monitoring device according to claim 11 and by a wind turbine according to claim 13.

According to the method for monitoring a fluid filled damper of a wind turbine, a pressure value inside a fluid filled damper of the wind turbine is measured. Since the fluid filled damper includes a vacuum if it functions correctly, an increase of the pressure in the fluid filled damper indicates that the damper comprises a leak, which deteriorates the damping properties of the damper.

Further, the pressure value is compared with a predetermined threshold value and an idle state of the rotor of the wind turbine is initiated if it is detected that the threshold value has been exceeded. The threshold value is selected such that a safe operation is ensured if the threshold value is not exceeded. Initiating an idle state of the rotor means that the rotor blades are turned completely into the feathered position, i.e. they are turned "out of the wind", such that the lift is lost and the rotor comes to a standstill.

Advantageously, the fluid filled dampers are automatically monitored and the wind turbine is automatically stopped if a leak is detected. Advantageously, any destruction or increased wear of the wind turbine is avoided. Further, a periodical manual inspection of the fluid dampers can be omitted and a running of the wind turbine with faulty fluid filled dampers between inspections is avoided.

The leak monitoring device according to the invention comprises a pressure measuring sensor for measuring a pressure value inside a fluid filled damper of a wind turbine. For measuring the pressure value inside the fluid filled damper, the pressure measuring sensor is preferably installed in a container comprised by the fluid filled damper. Further, the leak monitoring device comprises a control unit for comparing the measured pressure value with a predetermined threshold value and for initiating an idle state of the rotor of the wind turbine if it is detected that the threshold value has been exceeded. The leak monitoring device shares the advantages of the method for monitoring a fluid filled damper of a wind turbine.

The wind turbine according to the invention comprises a wind turbine nacelle and a tower on which the wind turbine nacelle is arranged. Further, the wind turbine according to the invention includes a rotor rotatable mounted on the wind turbine nacelle. Furthermore, the wind turbine comprises a fluid filled damper installed in the tower of the wind turbine and the leak monitoring device according to the invention. Furthermore, the wind turbine according to the invention comprises a safe pitch system, which is initiated by the leak monitoring device based on a measured pressure value in the fluid filled damper. The wind turbine according to the invention shares the advantages of the leak monitoring device.

Particularly advantageous embodiments and features of the invention are given by the dependent claims, as revealed in the following description. Features of different claim categories may be combined as appropriate to give further embodiments not described herein.

According to a variation of the method of the invention for monitoring a fluid filled damper of a wind turbine, the fluid filled damper comprises a fluid container including a damper fluid and a vacuum. If a leak occurs, the pressure in the container increases. For detecting such a leak immediately, preferably, the pressure measuring sensor is installed in the container of the fluid filled damper such that an increase of the pressure inside the container directly acts on the pressure measuring sensor. It has to be mentioned that a wind turbine usually comprises more than one single fluid filled damper for reducing movements of the tower of the wind turbine. Hence it is preferred that each of these fluid filled dampers includes a fluid container comprising a damper fluid and a vacuum.

Preferably, the pressure measuring sensor comprises a pressure transducer. A pressure transducer measures a pressure value and generates a signal representing the measured pressure value.

If the wind turbine comprises more than one fluid filled dampers, it is preferred that more than one, preferably each of the fluid dampers are monitored by a pressure measuring sensor, wherein in or on each of these fluid filled dampers, a pressure measuring sensor is installed.

Preferably, in the method for monitoring a fluid filled damper of a wind turbine, the comparison between the measured pressure value and the threshold value is performed by a control unit. The control unit can be implemented as a central control unit for a plurality of pressure measuring sensors. Alternatively, if a plurality of fluid filled dampers are monitored using a plurality of pressure measuring sensors, the control unit can be implemented as a plurality of control units, wherein each single one of these control units is assigned to a different pressure measuring sensor. Using one single central control unit has the advantage of reducing the number of control units for monitoring the fluid filled dampers and for initiating a reaction to a possibly detected leak in one of these fluid filled dampers. Using a plurality of control units in parallel has the advantage that in case only one control unit or a subset of these control units is out of order, the other correctly functioning control units may proceed further with monitoring the fluid filled dampers assigned to the correctly functioning control units.

In a further variant of the method according to the invention, the control unit comprises a programmable control unit. Advantageously, the control unit can be adapted to different application scenarios by individually programming the control unit.

Preferably, the programmable control unit comprises a turbine safety PLC. Advantageously, the turbine safety PLC is basically technically arranged to control the pitch of a rotor and to initiate an idle state of the rotor of a wind turbine for safety reasons and such the analysis of the pressure value and a possible safety reaction are enabled to be controlled by the same technical unit. Due to the described double function of the control unit, the number of electronic computing devices is minimized.

Preferably, the control unit is used for initiating the idle state of the rotor of the wind turbine. As mentioned above, in that variant, the control unit is used for the analysis of the pressure value and a possible safety reaction is enabled to be controlled by the same technical unit. Hence, the number of electronic computing devices is minimized.

Preferably, the wind turbine comprises a tower and the fluid filled damper is installed in the tower of the wind turbine. Advantageously, the dampers have the function of reducing vibrations of the tower induced by the movement of the rotor and the nacelle, such that likelihood of damage and high wear and tear of the tower structure is reduced.

In a variant of the method for monitoring a fluid filled damper of a wind turbine according to the invention, the idle state of the rotor of the wind turbine is initiated by controlling a safe pitch system installed on the rotor of the wind turbine. Such a safe pitch system enables to turn the rotor blades of the wind turbine "out of the wind" such that the rotor blades stand still and the movements and vibrations of the tower due to the movement of the rotor blades are avoided.

Other objects and features of the present invention will become apparent from the following detailed descriptions considered in conjunction with the accompanying drawings. It is to be understood, however, that the drawings are designed solely for the purposes of illustration and not as a definition of the limits of the invention. They are not necessarily drawn to scale.
FIG 1 shows a schematic cross view of a wind turbine according to an embodiment of the invention,
FIG 2 shows a flow chart illustrating a method for monitoring a fluid filled damper of a tower of a wind turbine according to the invention,
FIG 3 shows a block diagram illustrating a leak monitoring device according to an embodiment of the invention.

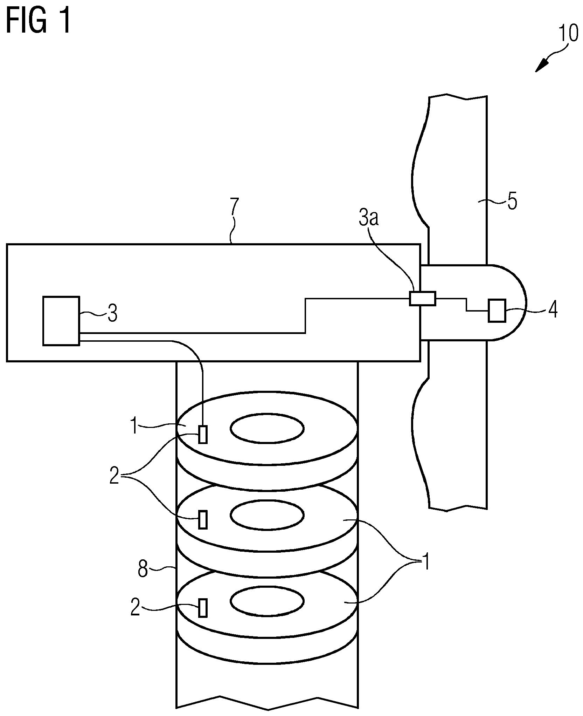

In FIG 1, a schematic cross view of a wind turbine 10 according to an embodiment of the invention is shown. The wind turbine 10 comprises a tower 8, on which a nacelle 7 with a wind propeller, i.e. a rotor 5 is installed. The upper portion of the tower 8 includes a plurality of fluid filled dampers 1, in particular fluid filled damper containers, containing a fluid and being evacuated. Further, inside each of these fluid damper containers, a pressure measuring sensor 2, which is arranged to measure a pressure value PV in the assigned fluid damper container, is installed. Each of these pressure measuring sensors 2 are electrically connected to a control unit 3, in particular a turbine safety PLC. The control unit 3 determines whether a predefined differential pressure threshold TH is exceeded by the measured pressure value PV and if the threshold TH is exceeded, a dedicated safe pitch system 4 is controlled by the control unit 3 such that the wind turbine 10 is brought into an idle safe state. The signal for initiating the idle safe state is transmitted through a contactor 3a between the nacelle 7 and the rotor 5.

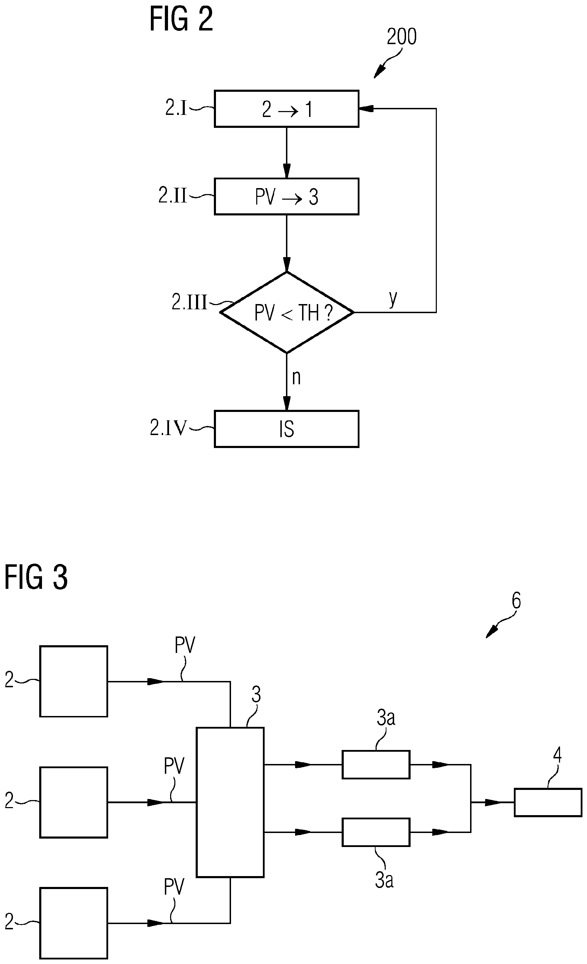

In FIG 2, there is shown a flow chart 200 depicting a method for monitoring a fluid filled damper 1 of a wind turbine 10 according to an embodiment of the invention. In step 2.1, a fluid filled damper 1 is monitored using a pressure measuring sensor 2. In step 2.II the measured pressure value PV is transmitted from the pressure measuring sensor 2 to a control unit 3, in particular a turbine safety PLC. In step 2.III the control unit 3 compares the received pressure value PV with a predetermined threshold value TH. If the threshold value TH is exceeded by the pressure value PV, which is symbolized in FIG 2 by "n", in step 2.IV, the wind turbine 10 is brought into an idle safe state IS by sending a control signal from the control unit 3 to a safe pitch system 4 of the wind turbine. If the threshold value TH is not exceeded by the pressure value PV, which is symbolized in Fig 2 by "y", the monitoring of the fluid filled damper 1 is continued with step 2.1.

In FIG 3, a block diagram illustrating a leak monitoring device 6 according to an embodiment of the invention is shown. The leak monitoring device 6 comprises a plurality of pressure measuring sensors 2, wherein each of these pressure measuring sensors 2 is installed in a fluid filled damper 1 (shown in FIG 1). The pressure measuring sensors 2 are electrically connected to a control unit 3, in particular a turbine safety PLC, which compares measurement values, i.e. pressure values PV with a threshold value TH. Further, the leak monitoring device 6 comprises also two contactors 3a, which are contactors between the stationary nacelle 7 of the wind turbine 10 and the rotor 5 of the wind turbine 10 (shown in FIG 1). These contactors 3a are redundant for increasing the robustness of the safe pitch system in case one of the contactors 3a fails. For that reason, two contactors 3a are installed. Furthermore, on the rotor 5 of the wind turbine 10, a safe pitch system 4 is arranged for changing the state of the rotor 5 of the wind turbine 10 into an idle state if a leak was detected by the control unit 3.

Although the present invention has been disclosed in the form of preferred embodiments and variations thereon, it will be understood that numerous additional modifications and variations could be made thereto without departing from the scope of the invention. For the sake of clarity, it is to be understood that the use of 'a' or 'an' throughout this application does not exclude a plurality, and 'comprising' does not exclude other steps or elements.

## Claims

1. Method for monitoring a fluid filled damper (1) of a wind turbine (10), comprising the steps of:
- measuring a pressure value (PV) inside the fluid filled damper (1) of the wind turbine (10) using a pressure measuring sensor (2),
- comparing the pressure value (PV) with a predetermined threshold value (TH),
- initiating an idle state of the rotor (5) of the wind turbine (10) if it is detected that the threshold value (TH) has been exceeded.

2. Method according to claim 1, wherein the fluid filled damper (1) comprises a fluid container including a damper fluid and a vacuum.

3. Method according to claim 1 or 2, wherein the pressure measuring sensor (2) is installed in the fluid filled damper (1) .

4. Method according to any of the preceding claims, wherein the pressure measuring sensor (2) comprises a pressure transducer.

5. Method according to any of the preceding claims, wherein the comparison between the measured pressure value (PV) and the threshold value (TH) is performed by a control unit (3).

6. Method according to claim 5, wherein the control unit (3) comprises a programmable control unit.

7. Method according to claim 6, wherein the programmable control unit (3) comprises a turbine safety PLC.

8. Method according to any of the claims 5 to 7, wherein the control unit (3) is used for initiating the idle state of the rotor (5) of the wind turbine (10).

9. Method according to any of the preceding claims, wherein the wind turbine (10) comprises a tower (8) and the fluid filled damper (1) is installed in the tower (8) of the wind turbine (10).

10. Method according to any or the preceding claims, wherein the idle state of the rotor (5) of the wind turbine (10) is initiated by controlling a safe pitch system (4) installed on the rotor (5) of the wind turbine (10).

11. Leak monitoring device (6), comprising:
- a pressure measuring sensor (2) for measuring a pressure value (PV) inside a fluid filled damper (1) of a wind turbine (10),
- a control unit (3) for comparing the pressure value (PV) with a predetermined threshold value (TH) and for initiating an idle state of the rotor (5) of the wind turbine (10) if it is detected that the threshold value (TH) has been exceeded.

12. Leak monitoring device (6) according to claim 11, wherein the control unit (3) comprises a turbine safety PLC.

13. Wind turbine (10), comprising:
- a wind turbine nacelle (7),
- a tower (8) on which the wind turbine nacelle (7) is arranged,
- a rotor (5) rotatable mounted on the wind turbine nacelle (7),
- a fluid filled damper (1) installed in the tower (8),
- the leak monitoring device (6) according to claim 11 or 12,
- a safe pitch system (4), which is arranged to be initiated by the leak monitoring device (6) based on a measured pressure value (PV) in the fluid filled damper (1).
